# EUROPÄISCHE PATENTANMELDUNG

(11) **EP 1 767 333 A1**
(43) Veröffentlichungstag der Anmeldung: **28.03.2007**
(21) Anmeldenummer: 05020870.1
(22) Anmeldetag: 24.09.2005
(51) Int. Cl.: B29C 47/76, B29C 47/44

(54) **Extruder und Verfahren zum Betreiben desselben**

(71) Anmelder: Reifenhäuser GmbH & Co. Maschinenfabrik, 53839 Troisdorf (DE)
(72) Erfinder: Behrendt, Matthias, 53773 Hennef (DE)
(74) Vertreter: Müller-Gerbes Wagner Albiger Patentanwälte

(57) **Zusammenfassung**

Die Erfindung betrifft einen Extruder zur Herstellung einer Schmelze thermoplastischen Kunststoffes aus einem zugeführten Rohmaterial, umfassend einen Zylinder (1) mit Einfüllöffnung (10) für das Rohmaterial und Austrittsöffnung (11) für die Schmelze sowie einer verschließbaren Entgasungsöffnung (12) zwischen der Einfüllöffnung (10) und der Austrittsöffnung (11) und eine mittels eines Antriebs im Zylinder drehbar angeordnete Schnecke (2) mit schraubenlinienförmig umlaufenden Schneckenstegen (20) für die Förderung des Rohmaterials bzw. der Schmelze in einer Förderrichtung, die zwischen einer ersten und einer zweiten Endposition axial verschieblich im Zylinder (1) gelagert ist, wobei die Schnecke (2) in Förderrichtung gesehen vor der Entgasungsöffnung (12) eine erste ringförmige Verdickung (21) und hinter der Entgasungsöffnung eine zweite ringförmige Verdickung (22) aufweist, denen entsprechende erste und zweite ringförmige Ausnehmungen (13,14) in der Innenwandung des Zylinders (1) zugeordnet sind, wobei in Abhängigkeit von der axialen Positionierung der Schnecke (2) in ihrer ersten oder zweiten Endposition zwischen den ringförmigen Verdickungen (21,22) der Schnecke (2) und den zugeordneten ringförmigen Ausnehmungen (13,14) der Innenwandung des Zylinders (1) jeweils wechselweise ein größerer Querschnitt für einen ungedrosselten Schmelzedurchtritt und ein kleinerer Querschnitt als Staustufe für einen gedrosselten Schmelzedurchtritt ausbildbar ist.

## Beschreibung

Die Erfindung betrifft einen Extruder zur Herstellung einer Schmelze thermoplastischen Kunststoffes aus einem zugeführten Rohmaterial, umfassend einen Zylinder mit Einfüllöffnung für das Rohmaterial und Austrittsöffnung für die Schmelze sowie einer verschließbaren Entgasungsöffnung zwischen der Einfüllöffnung und der Austrittsöffnung und eine mittels eines Antriebs im Zylinder drehbar angeordnete Schnecke mit schraubenlinienförmig umlaufenden Schneckenstegen für die Förderung des Rohmaterials bzw. der Schmelze in einer Förderrichtung, die axial verschieblich im Zylinder gelagert ist, sowie ein Verfahren zum Betreiben eines solchen Extruders.

Extruder zur Herstellung einer Schmelze thermoplastischen Kunststoffes aus einem zugeführten Rohmaterial sind vielfältig bekannt, wobei als eingesetztes Rohmaterial beispielsweise Polypropylen (PP), Polystyrol (PS) und Polyethylenterephthalat (PET) gefahren werden kann.

Die jeweiligen spezifischen Rohstoffeigenschaften erfordern bislang eine auf die verwendete Rohstoffsorte abgestimmte Bauweise von Schnecke und Zylinder. Beispielsweise bedingt die Herstellung von PS eine Entgasung, was über eine Entgasungsöffnung im Zylinder bewerkstelligt wird, um während des Aufschmelzens entstehende Gase aus dem Innenraum des Zylinders abzuleiten.

PP, andere Polyolefine oder auch PET bedingen keine derartige Entgasung.

Da jedoch ein Extruder nur in den seltensten Fällen kontinuierlich zur Verarbeitung eines einzigen Rohstoffes eingesetzt werden kann, besteht ein Bedarf nach universell geeigneten Extrudern, auf denen beispielsweise PP, PS und PET gleichermaßen gefahren werden können. Dies ist derzeit nur mit großen Kompromissen möglich.

So bedingt die bei der Herstellung von PS notwendige Entgasung, dass der Zylinder mit einer Entgasungsöffnung ausgebildet ist und diese Entgasungsöffnung während des Betriebs geöffnet wird. Darüber hinaus muss die Geometrie der eingesetzten Schnecke so ausgebildet sein, dass die Entgasungsöffnung frei gehalten wird.

Wird hingegen auf einer solchen Anlage ein solches Rohmaterial gefahren, welches keine Entgasung bedingt, so wird die Entgasungsöffnung mit einem Stopfen verschlossen, wobei jedoch für eine konstante Produktion vor der Schneckenspitze so viel Druck aufgebaut werden muss, dass die nun verschlossene Entgasungszone vollständig gefüllt ist. Dies führt in der Regel zu hohen Massetemperaturen oder geringen Durchsätzen, was gleichsam unbefriedigend ist.

Aus der gattungsbildenden DE 43 10 996 A1 ist ferner ein Verfahren zur Regelung des Massenstroms in den Zylindern eines Entgasungsextruders bekannt, bei dem die Schnecke axial verschieblich im Zylinder gelagert ist und vor der Entgasungsöffnung über eine ringförmige Verdickung verfügt, die mit einer entsprechenden Erweiterung des Zylinderdurchmessers korrespondiert, so dass über eine Verstellung der Axialposition der Schnecke der Spalt zwischen der konischen Erweiterung des Zylinders und der ringförmigen Verdickung der Schnecke variiert und damit Einfluss auf den Massendurchsatz des Extruders genommen werden kann. Eine universelle Anpassung an unterschiedliche Rohstoffe, insbesondere solche, die wahlweise eine Entgasung oder keine Entgasung bedingen, ist jedoch mit der bekannten Vorrichtung nicht möglich.

Aufgabe der Erfindung ist es daher, eine Vorrichtung der eingangs genannten Art dahingehend weiterzubilden, dass sie ohne großen baulichen Aufwand und mit kurzen Umrüstzeiten gleichsam sowohl für die Verarbeitung von Rohstoffen mit offener Entgasungsöffnung wie auch zur Verarbeitung von Rohstoffen mit verschlossener Entgasungsöffnung geeignet ist sowie ein entsprechendes Betriebsverfahren für den Extruder anzugeben.

Zur Lösung dieser Aufgabe wird erfindungsgemäß die Ausbildung eines Extruders gemäß den Merkmalen des Patentanspruches 1 vorgeschlagen.

Ein Verfahren zum Betreiben des Extruders ist Gegenstand des Patentanspruches 10.

Vorteilhafte Ausgestaltungen und Weiterbildungen der Erfindung sind Gegenstand der Unteransprüche.

Zur Lösung der gestellten Aufgabe schlägt die Erfindung vor, dass die Schnekke zwischen einer ersten und einer zweiten Endposition axial verschieblich im Zylinder gelagert ist und in Förderrichtung gesehen vor der Entgasungsöffnung eine erste ringförmige Verdickung und hinter der Entgasungsöffnung eine zweite ringförmige Verdickung aufweist, denen entsprechende erste und zweite ringförmige Ausnehmungen in der Innenwandung des Zylinders zugeordnet sind, wobei in Abhängigkeit von der axialen Positionierung der Schnecke in ihrer ersten oder zweiten Endposition zwischen den ringförmigen Verdickungen der Schnecke und den zugeordneten ringförmigen Ausnehmungen der Innenwandung des Zylinders jeweils wechselweise ein größerer Querschnitt für einen ungedrosselten Schmelzedurchtritt und ein kleinerer Querschnitt als Staustufe für einen gedrosselten Schmelzedurchtritt ausbildbar ist. Die ringförmigen Verdickungen der Schnecke und die zugeordneten Ausnehmungen des Zylinders dienen somit als wechselweise aktivierbare Stauelemente für die Schmelze, und zwar in Abhängigkeit von der axialen Positionierung der Schnecke.

In einer ersten axialen Endposition der Schnecke ist somit beispielsweise vor der Entgasungsöffnung eine Abstauung bewirkbar, da in diesem Fall dort zwischen der vor der Entgasungsöffnung befindlichen Verdickung und der zugeordneten Ausnehmung ein kleinerer Querschnitt als Staustufe für einen gedrosselten Schmelzedurchtritt ausgebildet wird. Entsprechend liegt dann in dieser Endposition der Schnecke nach der Entgasungsöffnung zwischen der hinter der Entgasungsöffnung befindlichen Verdickung und der zugeordneten Ausnehmung ein größerer Querschnitt für einen ungedrosselten Schmelzedurchtritt vor.

Wird die Schnecke in ihre andere axiale Endposition verlagert, kehren sich diese Verhältnisse um. Dann liegt zwischen der vor der Entgasungsöffnung befindlichen Verdickung und der zugeordneten Ausnehmung ein größerer Querschnitt für einen ungedrosselten Schmelzedurchtritt und zwischen der hinter der Entgasungsöffnung befindlichen Verdickung und der zugeordneten Ausnehmung ein kleinerer Querschnitt als Staustufe für einen gedrosselten Schmelzedurchtritt vor.

Durch axiale Verschiebung der Schnecke zwischen beiden axialen Endpositionen lässt sich demgemäß ihre Charakteristik entsprechend den Anforderungen des zu verarbeitenden Rohstoffes umkehren.

Somit kann in erfindungsgemäßer Weise je nach Endposition, in welcher sich die axial verschieblich gelagerte Schnecke befindet, ein ungedrosselter oder gedrosselter Schmelzedurchtritt ausgebildet werden und demgemäß die erstellte Schmelze aus dem Rohmaterial vor der Entgasungsöffnung aufgestaut werden, was für den Betrieb mit geöffneter Entgasungsöffnung notwendig ist, wie auch vor der Entgasungsöffnung einen ungedrosselten Betrieb ermöglichen, etwa wenn diese Entgasungsöffnung infolge Nichtbenutzung verschlossen ist.

Über die zweite ringförmige Verdickung der Schnecke und die zugeordnete ringförmige Ausnehmung kann darüber hinaus ebenfalls eine Drosselung als Staustufe für den Schmelzedurchtritt ausgebildet werden, um in diesem Bereich einen erhöhten Schmelzedruck aufzubauen.

Je nach Anforderung werden die ringförmigen Ausnehmungen im Zylinder und die entsprechenden ringförmigen Verdickungen der Schnecke in der gewünschten Anordnung vorgenommen, so dass sich in jeder Endposition die gewünschte Konfiguration für den Schmelzedurchtritt, nämlich entweder ungedrosselter oder aber gedrosselter Schmelzedurchtritt einstellt.

Das Verfahren zum Betreiben eines Extruders gemäß der Erfindung beruht darauf, dass der Extruder einen Zylinder mit Einfüllöffnung für das Rohmaterial und Austrittsöffnung für die Schmelze sowie eine Entgasungsöffnung zwischen der Einfüllöffnung und der Austrittsöffnung und eine mittels eines Antriebes im Zylinder drehbar angeordnete Schnecke für die Förderung des Rohmaterials bzw. der Schmelze in einer Förderrichtung aufweist, welche axial verschieblich im Zylinder gelagert ist.

Erfindungsgemäß wird vorgeschlagen, dass die Schnecke zwischen zwei Endpositionen axial verschiebbar im Zylinder gelagert ist und der Zylinder in Förderrichtung betrachtet vor und hinter der Entgasungsöffnung des Zylinders mit miteinander zusammenwirkenden Stauelementen für einen gedrosselten Schmelzedurchtritt ausgebildet ist, die jeweils wechselweise in beiden axialen Endpositionen der Schnecke aktiviert werden. Demgemäß können nun zwei Betriebszustände einfach und ohne langwierige Umrüstung oder Umbauten des Extruders realisiert werden:
1. In einem ersten Betriebszustand des Extruders wird die Schnecke in ihre erste Endposition verfahren, in welcher die in Förderrichtung betrachtet hinter der Entgasungsöffnung angeordneten Stauelemente zusammenwirken und einen gedrosselten Schmelzedurchtritt hervorrufen, während die vor der Entgasungsöffnung angeordneten Stauelemente nicht zusammenwirken und einen ungedrosselten Schmelzedurchtritt hervorrufen und die Entgasungsöffnung verschlossen ist.
2. In einem zweiten Betriebszustand des Extruders wird die Schnecke in ihre zweite Endposition verfahren, in welcher die in Förderrichtung betrachtet vor der Entgasungsöffnung angeordneten Stauelemente zusammenwirken und einen gedrosselten Schmelzedurchtritt hervorrufen, während die hinter der Entgasungsöffnung angeordneten Stauelemente nicht zusammenwirken und einen ungedrosselten Schmelzedurchtritt hervorrufen und Gase aus der Schmelze über einen an die Entgasungsöffnung angelegten Unterdruck abgezogen werden.

Es ist nach einem weiteren Vorschlag der Erfindung auch möglich, die Schnekke in einer Zwischenposition zwischen beiden axialen Endpositionen zu positionieren, so dass zwischen beiden Verdickungen und zugeordneten Ausnehmungen jeweils ein größerer Querschnitt für ungedrosselten Schmelzedurchtritt vorliegt und diese in ihrer Funktion als Stauelemente nicht zusammenwirken. In dieser Position wird somit der Extruder ohne Schmelzeabstauung betrieben.

Unter ungedrosseltem Schmelzedurchtritt bei größerem Querschnitt zwischen den ringförmigen Verdickungen und den zugeordneten Ausnehmungen wird im Sinne der Erfindung derjenige Schmelzedurchtritt verstanden, der im Vergleich zum gedrosselten Schmelzedurchtritt einen kleineren Durchflusswiderstand aufweist. Dieser kann im Vergleich zu den benachbarten Regionen zwischen Schnecke und Zylinder entweder gleich groß ausgebildet sein oder aber auch eine gewisse Drosselung des Schmelzestromes darstellen, die jedoch gleichwohl einen wesentlich leichteren und damit höheren Schmelzedurchtritt ermöglicht als es bei kleinerem Querschnitt in der dann anderen Endposition zwischen der Verdickung und der zugeordneten Ausnehmung der Fall ist.

Gemäß einem Vorschlag der Erfindung sind die als Stauelemente dienenden Verdickungen und die zugeordneten Ausnehmungen jeweils benachbart zur Entgasungsöffnung angeordnet und begrenzen eine Metering-Zone der Schnecke. In diesem Fall kann in einer Endposition der Schnecke der üblicherweise tief geschnittene Vakuum- bzw. Entgasungsteil der Schnecke in Förderrichtung betrachtet vor der Entgasungsöffnung abgestaut werden, so dass dieser Teil im wesentlichen drucklos ist und vollständig für die Entgasung zur Verfügung steht. Im Anschluss an die zweite Verdickung und zugeordnete Ausnehmung wird sodann die restliche Schneckenlänge für den Druckaufbau in der Schmelze benutzt, um diese sodann an ein an die Austrittsöffnung des Extruders anschließbares Werkzeug abzugeben.

Alternativ ist es nach einem weiteren Vorschlag der Erfindung jedoch auch möglich, die erste Verdickung und ihre zugeordnete Ausnehmung benachbart zur Entgasungsöffnung anzuordnen und die zweite Verdickung und ihre zugeordnete Ausnehmung im Bereich der der Austrittsöffnung des Zylinders zugeordneten Spitze der Schnecke auszubilden.

Wird demgemäß der Extruder mit einem Rohstoff beaufschlagt, welcher eine Entgasung bedingt, so wird die Entgasungsöffnung freigelegt und die Schnecke in ihre Endposition axial verfahren, in welcher die erste Verdickung und die zugeordnete Ausnehmung in Förderrichtung betrachtet vor der Entgasungsöffnung eine Staustufe mit kleinerem Querschnitt für den gedrosselten Schmelzedurchtritt ausbilden, damit diese Entgasungsöffnung nicht geflutet wird.

In diesem Fall ist zwischen der auslassseitig angeordneten zweiten ringförmigen Verdickung der Schnecke und der zugehörigen Ausnehmung keine Staustufe für einen gedrosselten Schmelzedurchtritt, sondern der größere Querschnitt für den ungedrosselten Schmelzedurchtritt vorhanden, so dass über die verbleibende Länge der Schnecke ab der Entgasungsöffnung genügend hoher Druck aufgebaut werden kann.

Wird alternativ die vorangehend erläuterte Vorrichtung mit einem Rohmaterial beschickt, welches keine Entgasung bedingt, so wird demgemäß die Entgasungsöffnung verschlossen und die Schnecke durch axiale Verschiebung in ihre andere Endposition bewegt, in welcher die Verdickung und Ausnehmung vor der nunmehr verschlossenen Entgasungsöffnung keine Staustufe ausbilden, da sich dann hier der größere Querschnitt befindet, während dementsprechend an der auslassseitigen Verdickung der Schnecke und der zugeordneten Ausnehmung hinter der Entgasungsöffnung eben eine solche Staustufe ausgebildet wird und das Material zur Schneckenspitze hin abgestaut wird, so dass unnötig hohen Scherungen und erhöhten Massetemperaturen, die bislang beim Stand der Technik unausweichlich gewesen sind, vorgebeugt wird.

In einer weiteren bevorzugten Ausführungsform des erfindungsgemäßen Extruders ist der Zylinder über seine gesamte die Schnecke aufnehmende Länge, ausgenommen die ringförmigen Ausnehmungen, mit konstantem Innendurchmesser ausgebildet, was nicht nur eine einfache Fertigung des Zylinders gewährleistet, sondern darüber hinaus auch die Möglichkeit bietet, die Schnecke bei einem notwendigen Schneckenwechsel oder auch Reinigungsvorgängen in der rationellen und an sich bekannten Weise nach vorne oder auch nach hinten aus dem Zylinder zu ziehen. Durch Ausbildung gleichen Innendurchmessers kann der Zylinder auch stets konstante Außendurchmesser aufweisen, so dass gleiche Heizbänder verwendet werden können, was ebenfalls zur wirtschaftlichen Herstellung des erfindungsgemäßen Extruders beiträgt.

Darüber hinaus ist auch der Durchmesser der ringförmigen Verdickungen der Schnecke maximal dem Innendurchmesser des Zylinders entsprechend ausgebildet, so dass auch eine kostengünstige Schneckenfertigung ermöglicht wird, da ein Rohling, der aus dem vollen gedreht bzw. gefräst wird, lediglich den maximalen Durchmesser der fertigen Schnecke aufweisen muss und somit Material- und Bearbeitungskosten entfallen.

Darüber hinaus kann der Zylinder des erfindungsgemäßen Extruders mehrteilig ausgebildet sein, wobei dann bevorzugt die Teilungsfuge im Bereich der ersten und/oder zweiten ringförmigen Ausnehmung verläuft. Diese Mehrteiligkeit des Zylinders ist zwar an sich aufwändiger als eine einteilige Ausführung des Zylinders, jedoch lässt sich in diesem Falle die ringförmige Ausnehmung besonders einfach mechanisch in die Zylinderwandung einbringen.

Wesentliches Merkmal des erfindungsgemäßen Extruders ist es, dass die beschriebenen Maßnahmen zur Beeinflussung der Schmelze, nämlich ungedrosselter oder gedrosselter Schmelzedurchtritt, im Extruder integriert sind, sich also nicht als eigene Komponenten hinter dem Extruder befinden. Erst durch diese Ausbildung ist es somit möglich, den Prozess der Schmelzeherstellung schon im Extruder zu beeinflussen. Mit Ausnahme der Schnecke sind hierbei keine beweglichen Teile erforderlich und für den Wechsel der Betriebsart mit oder ohne Entgasung muss von daher nur die Schnecke axial um wenige Millimeter von ihrer einen in die andere Endposition verschoben werden, was von außen ohne jede Demontage möglich ist. Der axiale Verfahrweg der Schnecke zwischen der ersten und zweiten Endposition beträgt hierbei lediglich wenige Millimeter, beispielsweise etwa 5 bis 30 mm. Hierbei entstehen keine Dichtprobleme, keine Schmelzeberührung bei der Umstellung und insbesondere sehr kurze Rüstzeiten, die 15 Minuten nicht übersteigen.

Gleichzeitig bleiben alle Vorteile einer zylindrischen Schnecke und eines zylindrischen Zylinders erhalten.

Die erläuterte axiale Bewegung der Schnecke aus ihrer einen in die andere Endposition kann beispielsweise von ihrem der Spitze abgewandten Ende her mittels eines Linearantriebes oder eines Schrauben-/Spindelantriebes in an sich bekannter Weise bewirkt werden.

Weitere Ausgestaltungen und Einzelheiten der Erfindung werden nachfolgend anhand von Ausführungsbeispielen in der Zeichnung näher erläutert. Es zeigen:
- Figur 1: in schematisierter Darstellung einen Schnitt durch einen Extruder gemäß einer ersten Ausführungsform der Erfindung, bei dem sich die Schnecke in einer ersten Endposition befindet,
- Figur 2: die Darstellung des Extruders gemäß Figur 1, wobei sich die Schnecke in der zweiten Endposition befindet,
- Figur 3: die Darstellung einer weiteren Ausführungsform des erfindungsgemäßen Extruders, bei der sich die Schnecke in einer ersten Endposition befindet,
- Figur 4: die Ausführungsform gemäß Figur 3, bei der sich die Schnecke in der zweiten Endposition befindet,
- Figur 5: die Ausführungsform gemäß Figur 3, bei der sich die Schnecke in einer Zwischenposition befindet.

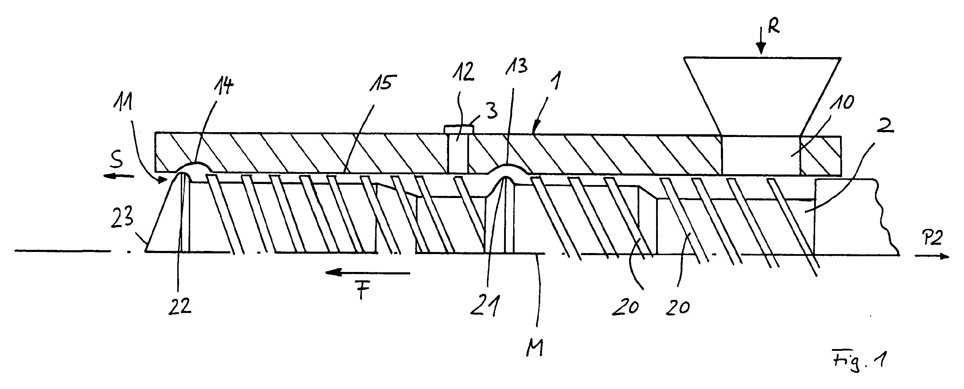

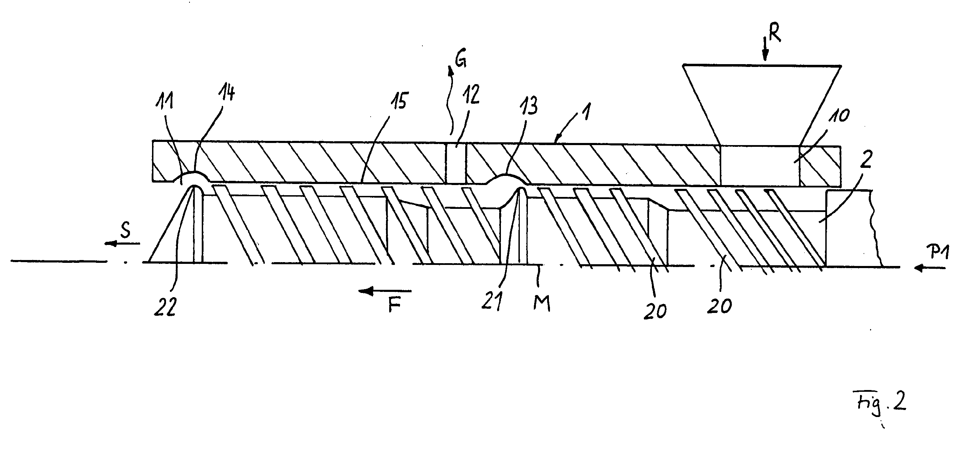

In den Figuren 1 und 2 ist eine erste Ausführungsform eines Extruders beschrieben, der zur Herstellung einer Schmelze thermoplastischen Kunststoffes aus einem zugeführten Rohmaterial verwendet wird und in seinen wesentlichen Bauteilen einen Zylinder 1 sowie eine Schnecke 2 umfasst.

Der Zylinder 1 umfasst an seinem einen Ende eine Einfüllöffnung 10 für die Zuführung von Rohmaterial R und an seinem anderen Ende eine Austrittsöffnung 11 für die hergestellte Schmelze S, die nachfolgend an ein nicht dargestelltes Werkzeug abgegeben wird.

Der Zylinder 1 verfügt über eine Innenwandung 15, die mit Ausnahme von nachfolgend noch näher erläuterten ringförmigen Ausnehmungen 13, 14 einen konstanten Durchmesser aufweist.

In an sich bekannter Weise ist im Innern des Zylinders 1 eine mittels eines nicht dargestellten Antriebes drehbar im Zylinder 1 gelagerte Schnecke 2 vorgesehen, die in verschiedenen nicht einzeln bezeichneten Zonen mehrere schraubenlinienförmig umlaufende Schneckenstege 20 aufweist, die bei Rotation der Schnecke 2 im Innern des Extruders das zugeführte Rohmaterial R in einer Förderrichtung F in Richtung auf die Austrittsöffnung 11 fördern und hierbei durch den mechanischen Energieeintrag sowie eine externe Beheizung des Zylinders 1 das Rohmaterial aufschmelzen und intensiv vermischen, so dass es letztlich den Extruder über die Austrittsöffnung 11 als Schmelze S verlässt.

Zwischen der Einfüllöffnung 10 und der Austrittsöffnung 11 des Zylinders 1 ist ferner eine Entgasungsöffnung 12 angeordnet, die im Ausführungsbeispiel gemäß Figur 1 mit einem Verschluss 3 verschlossen ist, in der Darstellung gemäß Figur 2 hingegen geöffnet ist, so dass Gase, die sich in der Schmelze ansammeln, gemäß Pfeil G entweichen können.

Wesentliches Merkmal der Schnecke 2 ist es, dass diese in Förderrichtung F betrachtet, vor und hinter der Entgasungsöffnung 12 des Zylinders 1 mit einer ringförmigen Verdickung 21 bzw. 22 versehen ist, die maximal den gleichen Durchmesser wie die Schneckenstege 20 aufweist. Entsprechend der Betrachtung in Förderrichtung F wird hierbei die vor der Entgasungsöffnung 12 liegende ringförmige Verdickung 21 als erste Verdickung und die dahinter liegende ringförmige Verdickung 22 als zweite Verdickung der Schnecke 2 bezeichnet.

Diesen Verdickungen 21, 22 zugeordnet sind gleichsam ringförmige Ausnehmungen 13, 14 in die Innenwandung 15 des Zylinders 1 eingebracht, welche in Bezug auf die Verdickungen 21 bzw. 22 in axialer Richtung der Mittelachse M der Schnecke 2 so angeordnet sind, dass sie wahlweise einen größeren Querschnitt ausbilden, der einen ungedrosselten Schmelzedurchtritt zwischen Schnecke 2 und Innenwandung 15 des Zylinders 1 ermöglichen oder aber einen kleineren Querschnitt ausbilden, der eine Staustufe für die Schmelze ausbildet und demgemäß nur einen gedrosselten Schmelzedurchtritt zwischen der Verdickung und der Innenwandung 15 des Zylinders 1 ermöglichen.

So zeigt im dargestellten Ausführungsbeispiel gemäß Figur 1 der Querschnitt zwischen der ersten ringförmigen Verdickung 21 und der zugeordneten ringförmigen Ausnehmung 13 vor der Entgasungsöffnung 12 einen größeren Querschnitt, während zwischen der zweiten ringförmigen Verdickung 22 und der zugeordneten ringförmigen Ausnehmung 14 ein demgegenüber stark verkleinerter Querschnitt für den Schmelzedurchtritt ausgebildet ist. Die ringförmige Verdikkung 22 und die zugeordnete ringförmige Ausnehmung 14 sind hierbei nahe der Austrittsöffnung 11 unmittelbar benachbart zur mit Bezugsziffer 23 bezeichneten Spitze der Schnecke 2 angeordnet.

Durch diese vorangehend erläuterte Konfiguration kann die Schnecke 2, sofern sie in Rotation mittels des nicht dargestellten Antriebs versetzt worden ist, mittels ihrer schraubenlinienförmig umlaufenden Schneckenstege 20 das eingefüllte Rohmaterial R von der Einfüllöffnung 10 über den ungedrosselten größeren Querschnitt zwischen der ringförmigen Verdickung 21 und der zugeordneten Ausnehmung 13, vorbei an der verschlossenen Entgasungsöffnung 12 bis hin vor die als Staustufe wirkende zweite Verdickung 22 und zugeordnete ringförmige Ausnehmung 14 fördern, die den kleineren Querschnitt für den Schmelzedurchtritt freigeben.

Eine solche Schneckengeometrie mit einer Abstauung der Schmelze unmittelbar vor der Austrittsöffnung 11 des Zylinders bei gleichzeitig verschlossener Entgasungsöffnung ist beispielsweise für die Herstellung nicht-gasender Rohstoffe, wie Polypropylen oder Polyethylenterephthalat gut geeignet, wobei vor der Abstauung im Bereich der ringförmigen Verdickung 22 und der zugeordneten ringförmigen Ausnehmung 14 hoher Druck aufgebaut wird und die Schmelze homogenisiert wird, bevor sie über die Austrittsöffnung 11 an das nachgeordnete Werkzeug abgegeben wird.

Eine solche Schneckengeometrie und Extruderkonfiguration ist jedoch ungeeignet, um ein Material zu verarbeiten, welches eine Entgasung bedingt, da in diesem Falle die Entgasungsöffnung 12 geöffnet, d. h. der gemäß Figur 1 vorgesehene Verschluss 3 abgenommen werden muss. Würde man den Extruder in der in Figur 1 gezeigten Konfiguration mit von der Entgasungsöffnung 12 abgenommenem Verschluss 3 betreiben, würde der sich vor der Staustufe zwischen ringförmiger Verdickung 22 und zugeordneter ringförmiger Ausnehmung 14 aufgebaute Rückdruck der Schmelze dazu führen, dass Material aus der Entgasungsöffnung 12 herausquillt, was selbstverständlich zu vermeiden ist.

Demgemäß ist es notwendig, den Rückstau und Druckaufbau der Schmelze vor der Spitze 23 der Schnecke zu begrenzen und gleichzeitig auch die Nachförderung von Material von der Einfüllöffnung bis hin zur Entgasungsöffnung 12 zu begrenzen, d. h. die geförderte Schmelze vor der Entgasungsöffnung 12 abzustauen.

Um die zu bewerkstelligen, ist bei üblichen Extrudern eine veränderte Schnekkengeometrie und damit ein Austausch der Schnecke 2 notwendig, was zu hohem Aufwand und zu hohen Umrüstzeiten führt.

Demgegenüber ist es bei der in der Figur 1 und 2 dargestellten Ausführungsform eines Extruders möglich, mittels eines nicht dargestellten Antriebes, wie eines Linearantriebes, eines Schraubenantriebes oder eines Spindelantriebes die Extruderschnecke entlang ihrer Mittelachse M axial im Zylinder 1 um einige Millimeter zu verfahren, und zwar hier aus der in der Figur 1 dargestellten ersten Endposition in Pfeilrichtung P2 in eine zweite Endposition, die in Figur 2 dargestellt ist. Umgekehrt ist mittels dieses Antriebs ein Verfahren in Pfeilrichtung P1 aus der in der Figur 2 dargestellten Endposition wieder zurück in die in der Figur 1 dargestellte Endposition gleichsam möglich.

In dieser in der Figur 2 dargestellten zweiten Endposition ändert sich an der vorangehend erläuterten Konfiguration des Extruders lediglich die Anordnung der Staustufe, d. h. des freigegebenen größeren bzw. kleineren Querschnittes zwischen den ringförmigen Verdickungen 21, 22 und den zugeordneten Ausnehmungen 13, 14.

Wie aus einem Vergleich der Figuren 1 und 2 nämlich ersichtlich ist, wird nunmehr durch das axiale Verfahren der Schnecke 2 in Pfeilrichtung P2 aus Figur 1 zwischen der ersten und vor der nunmehr geöffneten Entgasungsöffnung 12 liegenden ringförmigen Verdickung 21 und der zugeordneten ringförmigen Ausnehmung 13 in der Innenwandung 15 des Zylinders 1 ein kleinerer Querschnitt ausgebildet, der als Staustufe für einen gedrosselten Schmelzedurchtritt wirkt, während gleichzeitig an der zweiten ringförmigen Verdickung 22 hinter der Entgasungsöffnung 12 und der zugeordneten ringförmigen Ausnehmung 14 nunmehr der größere Querschnitt für einen ungedrosselten Schmelzedurchtritt vorliegt. In dieser Konfiguration kann es aufgrund des fehlenden Gegendrucks an der Schneckenspitze 23 und die Abstauung vor der Entgasungsöffnung 12 nunmehr nicht mehr zu einem Austritt von Schmelze aus dem Innern des Zylinders 1 über die Entgasungsöffnung 12 kommen, so dass in dieser Konfiguration die Entgasung der Schmelze möglich ist und der Extruder von daher beispielsweise zur Verarbeitung von Polystyrol (PS) verwendet werden kann.

Wie bereits erläutert, ergibt sich diese Änderung der Konfiguration nicht durch einen Schneckenaustausch, sondern lediglich um eine geringfügige axiale Verschiebung der aus den Figuren 1 und 2 ersichtlichen Schnecke 2 um beispielsweise einen Verfahrweg von 5 bis 30 mm.

Gleichwohl ist aus den Darstellungen gemäß Figur 1 und 2 ersichtlich, dass infolge des konstanten Durchmessers des Zylinders 1 mit Ausnahme der ringförmigen Ausnehmungen 13, 14 und auch dadurch, dass die ringförmigen Verdikkungen 21, 22 der Schnecke 2 keinen größeren Durchmesser als die Schnekkenstege 20 aufweisen und diese allesamt maximal dem Innendurchmesser des Zylinders 1 entsprechen, in jedem Falle z. B. zu Reinigungszwecken die Möglichkeit gegeben ist, die Schnecke nach vorne über die Austrittsöffnung 11 oder auch nach hinten aus dem Zylinder 1 zu ziehen, was an sich für eine problemlose Reinigung oder auch einen Schneckenwechsel wünschenswert ist.

Aufgrund der axialen Bewegung der Schnecke wird jedoch eine in kürzester Zeit mögliche Umrüstung von einem Betrieb mit verschlossener Entgasungsöffnung 12 gemäß Figur 1 auf einen Betrieb mit geöffneter Entgasungsöffnung 12 gemäß Figur 2 und umgekehrt ermöglicht, wobei in beiden Betriebsarten geringere Massentemperaturen und höhere Leistungen erzielt werden können.

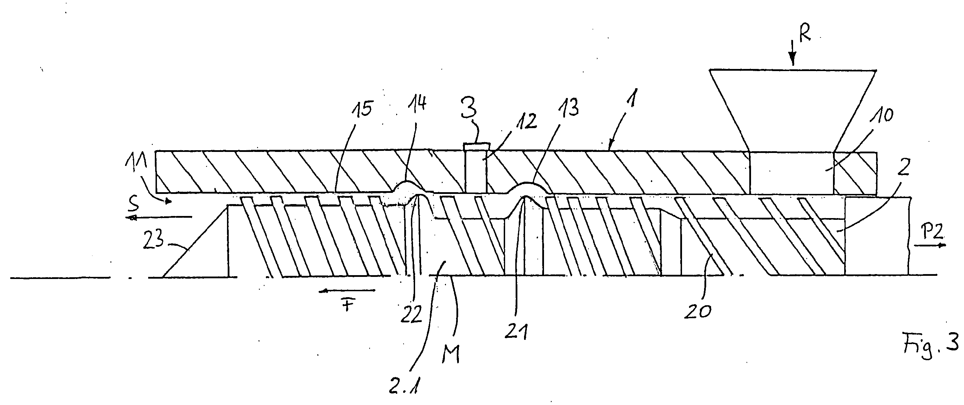

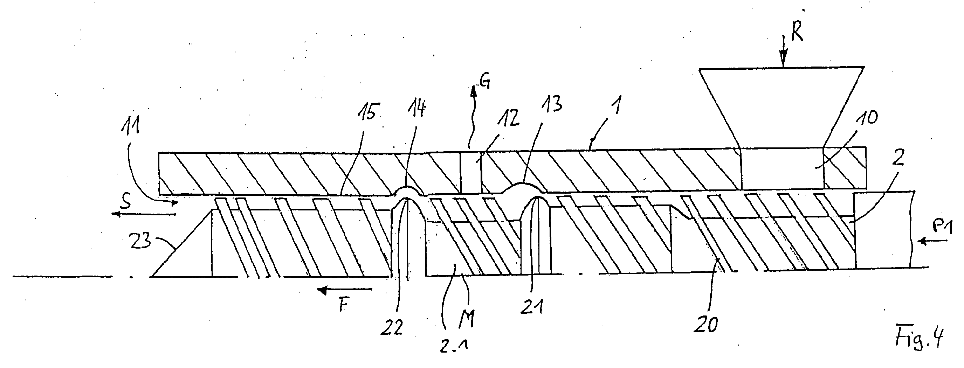

Eine gegenüber der zuvor erläuterten Ausführungsform abgewandelte Ausführungsform ist Gegenstand der Figuren 3 und 4, wobei die Figur 3 in der bereits erläuterten Weise die Schnecke 2 in ihrer ersten Endposition und die Figur 4 die Schnecke 2 in ihrer zweiten Endposition zeigt, die ausgehend von Figur 3 durch axiale Bewegung in Pfeilrichtung P2 erreicht wurde. Umgekehrt wird die Position in Figur 3 durch axiale Bewegung in Pfeilrichtung P1 gemäß Figur 4 erreicht.

Zur Vermeidung von Wiederholungen sind gleiche Teile mit gleichen Bezugsziffern erläutert und werden nicht gesondert erläutert, sofern dies nicht zum Verständnis der Ausführungsform erforderlich ist.

Im Gegensatz zu der Ausführungsform gemäß Figuren 1 und 2 ist die zweite ringförmige Verdickung 22 und die zugeordnete ringförmige Ausnehmung 14 hinter der Entgasungsöffnung 12 nicht nahe der Spitze 23 und im Bereich der Austrittsöffnung 11 angeordnet, sondern diese ist, wie auch die erste ringförmige Verdickung 21 und die zugeordnete ringförmige Ausnehmung 13 vor der Entgasungsöffnung 12 unmittelbar benachbart zu dieser Entgasungsöffnung 12 angeordnet, so dass beide ringförmige Verdickungen 21, 22 und ihre zugeordneten ringförmigen Ausnehmungen 13, 14 die so genannten Metering-Zone der Schnecke 2 begrenzen. Diese Metering-Zone der Schnecke 2, die in Figur 3 und Figur 4 mit Bezugsziffer 2.1 gekennzeichnet ist, ist mit besonders kleinem Schneckenkerndurchmesser und demgegenüber größeren Schneckenstegen 20 ausgeführt, wobei wiederum sämtliche Schneckenstege 20 und auch die ringförmigen Verdickungen 21, 22 einen Außendurchmesser aufweisen, der maximal dem des Innendurchmessers des Zylinders 1 entspricht, so dass in Verbindung mit dem konstanten Durchmesser des Zylinders 1 mit Ausnahme der ringförmigen Ausnehmungen 13, 14 das axiale Ziehen der Schnecke 2 nach vorne oder hinten ermöglicht ist.

Kennzeichnend auch für die Ausführungsform gemäß Figur 3 und 4 ist es, dass die jeweilige Ausbildung der größeren bzw. kleineren Querschnitte an beiden ringförmigen Verdickungen 21, 22 und den zugeordneten ringförmigen Ausnehmungen 13, 14 je nach Endposition der Schnecke 2 jeweils wechselweise eingestellt wird, d. h. entweder liegen an einer der ringförmigen Verdickungen 21, 22 ein größerer und ungedrosselten Schmelzedurchtritt ermöglichender Querschnitt und an der anderen Verdickung ein kleinerer und gedrosselten Schmelzedurchtritt ermöglichender Querschnitt vor, oder umgekehrt.

In der in Figur 3 dargestellten Endposition der Schnecke 2 ist der erste Fall, d. h. an der ringförmigen Verdickung 21 vorherrschender größerer Querschnitt für ungedrosselten Schmelzedurchtritt und an der ringförmigen Verdickung 22 vorherrschender kleinerer Querschnitt als Staustufe für einen gedrosselten Schmelzedurchtritt gegeben. Dieser Zustand entspricht dem Ausführungsbeispiel gemäß Figur 1 und eignet sich für die Verarbeitung von Rohmaterialien R, die keine Entgasung bedingen, so dass die Entgasungsöffnung 12 wiederum vermöge eines Verschlusses 3 verschlossen ist.

Bei der in der Figur 4 dargestellten anderen Endposition der Schnecke 2 wird die Schmelze vor der nun geöffneten Entgasungsöffnung 12 im Bereich der Metering-Zone 2.1 der Schnecke 2 zwischen der ringförmigen Verdickung 21 und der zugeordneten ringförmigen Ausnehmung 13 abgestaut, so dass die gesamte große Gangtiefe aufgrund des geringen Kerndurchmessers der Schnecke 2 in der Metering-Zone 2.1 für die intensive Entgasung der Schmelze und die Abfuhr von Gasen G über die Entgasungsöffnung 12 zur Verfügung steht. Zwischen der ringförmigen Verdickung 22 und der zugeordneten Ausnehmung 14 hinter der Entgasungsöffnung 12 findet hingegen keine Abstauung mehr statt, d. h. dieses Ausführungsbeispiel entspricht funktional dem der Figur 2. Die restliche verbleibende Schneckenlänge in Förderrichtung F betrachtet nach der zweiten ringförmigen Verdickung 22 und der zugeordneten Ausnehmung 14 steht somit für den Druckaufbau zum Werkzeug (nicht dargestellt) zur Verfügung.

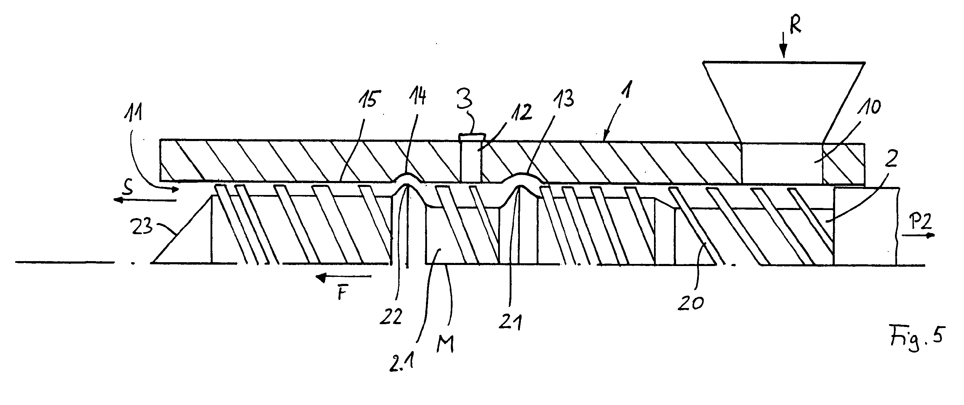

Wenn der Verschiebeweg zwischen beiden axialen Endpositionen lang genug ausgeführt wird, ist auch eine dritte Betriebsstellung in einer Zwischenposition der Schnecke 2 gemäß Figur 5 möglich, in der weder vor noch nach der Entgasungsöffnung 12 eine Abstauung erfolgt und die Schnecke zwischen den Endpositionen gemäß Figur 3 und Figur 4 positioniert ist.

Zusammenfassend kann daher festgestellt werden, dass die Erfindung einen Extruder mit einer so genannten Vakuumschnecke vorschlägt, die für einen Betrieb mit Entgasungsöffnung 12 im Zylinder 1 geeignet ist. Durch geringe Umrüstung, nämlich lediglich ein geringfügiges axiales Verfahren der Schnecke 2 entlang ihrer Längsachse kann diese Vakuumschnecke für einen Betrieb mit verschlossener Entgasungsöffnung 12 umgerüstet werden, so dass bislang stets notwendige aufwändige Wechsel der Schnecken 2 zur Ausbildung anderer Geometrien sich erübrigen.

## Patentansprüche

1. Extruder zur Herstellung einer Schmelze thermoplastischen Kunststoffes aus einem zugeführten Rohmaterial, umfassend einen Zylinder (1) mit Einfüllöffnung (10) für das Rohmaterial (R) und Austrittsöffnung (11) für die Schmelze (S) sowie einer verschließbaren Entgasungsöffnung (12) zwischen der Einfüllöffnung (10) und der Austrittsöffnung (11) und eine mittels eines Antriebs im Zylinder (1) drehbar angeordnete Schnecke (2) mit schraubenlinienförmig umlaufenden Schneckenstegen (20) für die Förderung des Rohmaterials (R) bzw. der Schmelze (S) in einer Förderrichtung (F), die axial verschieblich im Zylinder (1) gelagert ist, **dadurch gekennzeichnet, dass** die Schnecke (2) zwischen einer ersten und einer zweiten Endposition axial verschieblich im Zylinder (1) gelagert ist und in Förderrichtung (F) gesehen vor der Entgasungsöffnung (12) eine erste ringförmige Verdickung (21) und hinter der Entgasungsöffnung (12) eine zweite ringförmige Verdickung (22) aufweist, denen entsprechende erste und zweite ringförmige Ausnehmungen (13, 14) in der Innenwandung (15) des Zylinders (1) zugeordnet sind, wobei in Abhängigkeit von der axialen Positionierung der Schnecke (2) in ihrer ersten oder zweiten Endposition zwischen den ringförmigen Verdickungen (21, 22) der Schnecke (2) und den zugeordneten ringförmigen Ausnehmungen (13, 14) der Innenwandung (15) des Zylinders (1) jeweils wechselweise ein größerer Querschnitt für einen ungedrosselten Schmelzedurchtritt und ein kleinerer Querschnitt als Staustufe für einen gedrosselten Schmelzedurchtritt ausbildbar ist.

2. Extruder nach Anspruch 1, **dadurch gekennzeichnet, dass** die Verdikkungen (21, 22) und die zugeordneten Ausnehmungen (13, 14) benachbart zur Entgasungsöffnung (12) angeordnet sind und eine Metering-Zone (2.1) der Schnecke (2) begrenzen.

3. Extruder nach Anspruch 1, **dadurch gekennzeichnet, dass** die erste Verdickung (21) und ihre zugeordnete Ausnehmung (13) benachbart zur Entgasungsöffnung (12) und die zweite Verdickung (22) und ihre zugeordnete Ausnehmung (14) im Bereich der der Austrittsöffnung (11) des Zylinders (1) zugeordneten Spitze (23) der Schnecke (2) ausgebildet sind.

4. Extruder nach einem der Ansprüche 1 bis 3, **dadurch gekennzeichnet, dass** der Zylinder (1) über seine gesamte, die Schnecke (2) aufnehmende Länge, ausgenommen die ringförmigen Ausnehmungen (13, 14) mit konstantem Innendurchmesser ausgebildet ist.

5. Extruder nach einem der Ansprüche 1 bis 4, **dadurch gekennzeichnet, dass** der Durchmesser der ringförmigen Verdickungen (21, 22) der Schnecke (2) maximal dem Innendurchmesser des Zylinders (1) entsprechend ausgebildet ist.

6. Extruder nach einem der Ansprüche 1 bis 5, **dadurch gekennzeichnet, dass** der Zylinder (1) mehrteilig ausgebildet ist, wobei die Teilungsfuge im Bereich der ersten und/oder zweiten ringförmigen Ausnehmung (13, 14) verläuft.

7. Extruder nach einem der Ansprüche 1 bis 6, **dadurch gekennzeichnet, dass** der axiale Verfahrweg der Schnecke (2) zwischen der ersten und zweiten Endposition etwa 5 bis 30 mm beträgt.

8. Extruder nach einem der Ansprüche 1 bis 7, **dadurch gekennzeichnet, dass** die axiale Bewegung der Schnecke (2) von ihrem der Spitze (23) abgewandten Ende her mittels eines Linearantriebes oder eines Schrauben-/Spindelantriebes bewirkbar ist.

9. Extruder nach einem der Ansprüche 1 bis 8, **dadurch gekennzeichnet, dass** zwischen der ersten und zweiten Endposition der Schnecke (2) eine Zwischenposition vorgesehen ist, in der zwischen beiden Verdickungen (21, 22) und den zugeordneten Ausnehmungen (13, 14) jeweils ein größerer Querschnitt für einen ungedrosselten Schmelzedurchtritt ausbildbar ist.

10. Verfahren zum Betreiben eines Extruders zur Herstellung einer Schmelze thermoplastischen Kunststoffes aus einem zugeführten Rohmaterial (R), wobei der Extruder einen Zylinder (1) mit Einfüllöffnung (10) für das Rohmaterial (R) und Austrittsöffnung (11) für die Schmelze (S) sowie eine Entgasungsöffnung (12) zwischen der Einfüllöffnung (10) und der Austrittsöffnung (11) und eine mittels eines Antriebes im Zylinder (1) drehbar angeordnete Schnecke (2) für die Förderung des Rohmaterials (R) bzw. der Schmelze (S) in einer Förderrichtung (F) aufweist, welche axial verschieblich im Zylinder (1) gelagert ist, **dadurch gekennzeichnet, dass** die Schnecke (2) zwischen zwei Endpositionen axial verschiebbar im Zylinder (1) gelagert ist und der Zylinder (1) in Förderrichtung (F) betrachtet vor und hinter der Entgasungsöffnung (12) des Zylinders (1) mit miteinander zusammenwirkenden Stauelementen (21, 13; 22, 14) für einen gedrosselten Schmelzedurchtritt ausgebildet ist, die jeweils wechselweise in beiden axialen Endpositionen der Schnecke (2) aktiviert werden, dergestalt, dass
- in einem ersten Betriebszustand des Extruders die Schnecke (2) in ihre erste Endposition verfahren wird, in welcher die in Förderrichtung (F) betrachtet hinter der Entgasungsöffnung (12) angeordneten Stauelemente (22, 14) zusammenwirken und einen gedrosselten Schmelzedurchtritt hervorrufen, während die vor der Entgasungsöffnung (12) angeordneten Stauelemente (21, 13) nicht zusammenwirken und einen ungedrosselten Schmelzedurchtritt hervorrufen und die Entgasungsöffnung (12) verschlossen ist, und
- in einem zweiten Betriebszustand des Extruders die Schnecke (2) in ihre zweite Endposition verfahren wird, in welcher die in Förderrichtung (F) betrachtet vor der Entgasungsöffnung (12) angeordneten Stauelemente (21, 13) zusammenwirken und einen gedrosselten Schmelzedurchtritt hervorrufen, während die hinter der Entgasungsöffnung (12) angeordneten Stauelemente (22, 14) nicht zusammenwirken und einen ungedrosselten Schmelzedurchtritt hervorrufen und Gase aus der Schmelze (S) über einen an die Entgasungsöffnung (12) angelegten Unterdruck abgezogen werden.

11. Verfahren nach Anspruch 10, **dadurch gekennzeichnet, dass** ein dritter Betriebszustand vorgesehen ist, in welchem die Schnecke (2) in eine Zwischenposition zwischen ihren Endpositionen verfahren wird und in welcher die Stauelemente (13, 14, 21, 22) nicht zusammenwirken und einen jeweils ungedrosselten Schmelzedurchtritt hervorrufen.
